(19) Europäisches Patentamt
European Patent Office
Office européen des brevets

(11) Veröffentlichungsnummer: **0 122 394**
**B1**

(12) # EUROPÄISCHE PATENTSCHRIFT

(45) Veröffentlichungstag der Patentschrift: **17.12.86**

(51) Int. Cl.⁴: **C 08 G 65/44**

(21) Anmeldenummer: **84101607.4**

(22) Anmeldetag: **16.02.84**

(54) **Verfahren zur Herstellung von Polyphenylenoxiden.**

(30) Priorität: **16.04.83 DE 3313864**

(43) Veröffentlichungstag der Anmeldung: **24.10.84 Patentblatt 84/43**

(45) Bekanntmachung des Hinweises auf die Patenterteilung: **17.12.86 Patentblatt 86/51**

(84) Benannte Vertragsstaaten: **AT BE DE FR GB IT NL SE**

(56) Entgegenhaltungen:
**EP-A-0 098 929**
**DE-A-2 358 729**
**DE-A-2 505 328**
**DE-A-2 738 714**
**DE-A-2 913 204**
**DE-B-1 645 515**

(73) Patentinhaber: **HÜLS AKTIENGESELLSCHAFT, Patentabteilung / PB 15 - Postfach 13 20, D-4370 Marl 1 (DE)**

(72) Erfinder: **Bartmann, Martin, Dr., Burgstrasse 35, D-4350 Recklinghausen (DE)**
Erfinder: **Bax, Hanns- Jörg, Dr., Lipper Weg 193, D-4370 Marl (DE)**
Erfinder: **Burzin, Klaus, Dr., Wellerfeldweg 164, D-4370 Marl (DE)**
Erfinder: **Ribbing, Wilfried, Dr., Heesternweg 20, D-4270 Dorsten 12 (DE)**

**EP 0 122 394 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Polyphenylenoxide und zahlreiche Verfahren zu ihrer Herstellung sind bekannt (vgl. z. B. Bühler "Spezialplaste", Akademieverlag, Berlin, 1978). Im industriellen Bereich haben sich die Verfahren durchgesetzt, bei denen diorthosubstituierte Phenole in Gegenwart von Sauerstoff durch Kupferaminkomplexe oxidativ gekuppelt werden.

Gegenstand des DE-d- 15 70 683 ist ein Verfahren, bei dem ein Katalysator aus einem aminbasischen Kupfer-II-salz-Komplex der Formel Cu(OH)X - RR' -NH, wobei X ein Säureanion, R und R' Alkylreste sind und R' zusätzlich Wasserstoff sein kann, die Rolle eines Sauerstoffüberträgers übernimmt. Ausgehend von Kupfer-II-salzen wird der aktive Komplex in Gegenwart des primären oder sekundären aliphatischen Amins beispielsweise durch Mischen eines Kupfer-II-salzes mit Kupfer-II-hydroxid oder durch Zugabe einer Base zu einem Kupfer-II-salz hergestellt. Der gleiche Komplex kann sich aber auch während der Polykondensation bilden, wenn man von einem Kupfer-I-salz und einem Amin der Formel RR'NH ausgeht und der erhaltene Komplex oxidiert wird. Komplexe dieser Amine mit nichtbasischen Kupfer-II-salzen oder Kupfer-II-hydroxid sind dagegen nicht aktiv. Die Reaktion wird üblicherweise durch zugabe einer Mineralsäure oder einer Base abgestoppt. Die DE-PS 15 70 683 eröffnete damit das erste technisch brauchbare Verfahren zur Herstellung von Polyphenylenoxiden.

Bei der großtechnischen Anwendung dieses Verfahrens machten sich jedoch bald Nachteile bemerkbar.

1. Es sind hohe Katalysatorkonzentrationen erforderlich, um zu akzeptablen Reaktionsgeschwndigkeiten und Polymerisationsgraden zu kommen.

2. Kupferaminkomplexe mit höherer katalytischer Aktivität erfordern teuerere und aufwendigere Komponenten, beispielsweise wasserfreie Kupfersalze, spezielle Amintypen, zusätzliche Metallbromide. Damit wird es aber immer schwieriger, das PPO vom Amin und den übrigen Katalysatorbestandteilen zu trennen. zur Rückgewinnung der Amine ist ein aufwendiges Recycling erforderlich.

3. Die Verwendung von Sauerstoff als Oxidationsmittel birgt - neben den im Vergleich zu Luft höheren Kosten - das Risiko einer Feuer- und Explosionsgefahr in sich. Viele Verfahren des Standes der Technik sind aber auf Sauerstoff angewiesen, bei anderen sinkt die Reaktionsgeschwindigkeit drastisch ab, wenn man zu Luft übergeht, so daß die PPO-Herstellung unwirtschaftlich wird.

4. Sehr störend macht sich die Bildung farbiger Nebenprodukte, wie z. B. Diphenochinon, bemerkbar. Eine vollständige Abtrennung vom PPO ist schwierig.

Im folgenden seien die wichtigsten Verfahren aufgeführt:

Die DE-PS 16 45 515 (US-PS 3 384 61 9) beschreibt ein Verfahren für die Polykondensation von Phenolen zu hochmolekularen Polyphenylenoxiden, bei dem ein Katalysator verwendet wird, der ein tertiäres Amin und ein nicht-basisches Kupfer-11-halogenid enthält. Die Katalysatorkonzentration ist bei diesem Verfahren ungewöhnlich hoch. Bei einem Einsatz von 9 Teilen Amin pro Teil Phenol wird das gesamte Verfahren wirtschaftlich uninteressant.

Nach der DE-PS 20 11 709 (US-PS 3 639 656) wird ein Komplex aus einem primären oder sekundären Amin mit einem wasserfreien, nicht-basischen Kupfer-II-salz verwendet. Damit kann die Katalysatormenge aut 0,01 Mol Kupfer und 0,15 Mol Amin pro Mol Phenol reduziert werden. Dem Erfordernis der Wasserfreiheit der eingesetzten Kupfersalze kommt eine besondere Bedeutung zu (vgl- Spalte 4, Zeile 45, bis Spalte 5, Zeile 5).

Die DE-PS 20 11 711 (US-PS 3 661 848) beschreibt ein Verfahren zur Herstellung von PPO in Anwesenheit eines nicht-basischen Kupfer-II-salzes, eines geradkettigen aliphatischen Amins und eines niedermolekularen Alkohols in einer Menge von weniger als 5, vorzugsweise 0,5 bis 3 Volumenprozent- Als Oxidationsmittel wird Sauerstoff eingesetzt.

Nach dem Verfahren der DE-PS 22 17 161 (US-PS 3 989 671) wird ein Katalysator aus bestimmten Kupfer-II-salzen, tertiären Diaminen und einer Jodverbindung eingesetzt. Zwar ist es nach diesem Verfahren möglich, PPO mit einer Viskosität von 1,3 dl/g zu erhalten, aber dies rechtfertigt nicht den Einsatz der teuren Jodverbindungen.

In der DE-PS 22 28 071 (US-PS 3 733 299) wird ein Katalysator beschrieben, der neben einem ein- oder zweiwertigen Kupfersalz und einem Amin ein (Erd)Alkalimetallbromid enthält. Als Oxidationsmittel ist Sauerstoff erforderlich. Die Verwendung von Metallbromiden hat den Nachteil, daß die Aufarbeitung durch die Anwesenheit zusätzlicher Metallionen kompliziert wird.

In der DE-OS 24 60 326 (US-PS 3 900 445) wird ein Katalysator aus einem wasserfreien Kupfer-I- und Kupfer-II-salz und einem primären, sekundären oder tertiären Amin beschrieben. Damit wird die Verwertung des Sauerstoffs verbessert, doch bleibt das Risiko der Feuer- und Explosionsgefahr im Reaktor (vgl. Seite 10, Beispiel 5).

Die DE-OS 25 05 328 (US-PS 4 028 341) beschreibt einen Katalysator aus einern Kupfer-I- oder Kupfer-II-salz, dem Bromidion und mindestens einern sekundären Alkylendiamin und einem tertiären Monoamin.

Der Katalysator der DE-OS 27 38 889 (US-PS 4 092 294) besteht zusätzlich aus einem sekundären Monoamin- Abgesehen von der Frage der Verfügbarkeit dieser Amine stellt sich hier die Aufgabe, ein kompliziertes Amingemisch aufarbeiten zu müssen. Ein weiterer Nachteil dieser beiden Verfahren besteht darin, daß die Aminkomponenten entsprechend ihrer jeweiligen Flüchtigkeit in unterschiedlichem Maße mit dem eingeleiteten Gas aus der Reaktion ausgetragen werden und sich damit die Aktivität des Katalysators während der Reaktion verändern kann.

Um diesen Nachteil zu beheben, wird daher in der DE-OS 29 13 204 (US-PS 4 211 857) vorgeschlagen, das in

das Reaktionssystem eingeführte Gas in einem geschlossenen System zu zirkulieren, das mitgerissene Amin durch Abkühlung abzutrennen und den verbrauchten Sauerstoff kontinuierlich zu ersetzen.

Die DE-OS 30 35 599 nennt als wesentliche Nachteile der bekannten Verfahren das Risiko der Ausbildung explosiver Gasgemische im Reaktionsraum und die Bildung des Nebenproduktes Diphenochinon, das nur schwer von PPO abzutrennen ist (wgl. DE-OS 21 34 095 = US-PS 3 637 593)- Die Beispiele belegen jedoch nach wie vor den Einsatz von reinem Sauerstoff und wasserfreien Kupfersalzen. Diese Lösung vermag daher nicht zu überzeugen.

Die deutschen Patentanmeldungen DE-A-32 24 692 und DE-A 32 24 691 offenbaren PPO-Herstellungsverfahren, bei denen Morpholiniumbromid bzw. mehrwertige Alkohole und wäßrige (Erd)Alkalihydroxidlösungen als Aktivatorkombinationen in festgelegten Molverhältnissen eingesetzt werden. Es wird gezeigt, daß man die J-Werte, die als Maß für den Polymerisationsgrad gewertet werden, im Vergleich zu Verfahren, in denen als Aktivator lediglich eine der Komponenten Morpholiniumbromid, mehrwertige Alkohole oder Alkalihydroxide eingesetzt werden, erheblich verbessern kann. Ungünstig sind die hohen Mengen an Amin, die nach diesen Verfahren benÖtigt werden.

Die große Zahl der aufgeführten Verfahren belegt eindrucksvoll die Schwierigkeiten, diorthosubstituierte Phenole der allgemeinen Formel

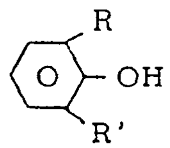 ,

wobei R und R' jeweils ein n-Alkylrest mit 1 bis 6 C-Atomen oder ein Phenylrest ist, in Lösung in Gegenwart eines Kupferaminkatalysators im Temperaturbereich zwischen 20 und 60°C in einfacher Weise gefahrlos oxidativ zu kuppeln.

Es wurde jetzt ein Verfahren zur Herstellung von PPO gefunden, mit dem die geschilderten Nachteile des Standes der Technik überwunden werden können. Die sorgfältig aufeinander abgestimmten Maßnahmen deser fundungssgemäßen Verfahrens gehen aus den Ansprüchen 1 bis 7 hervor. Obwohl einzelne Maßnahmen aus den Verfahren nach dem Stand der Technik bekannt sind, ist es doch überraschend, daß die jetzt gefundene Kombination, gegen die es eine Reihe von Vorurteilen gibt, es gestattet, in so einfacher Weise Polyphenylenoxide herzustellen.

Das erfindungsgemäße Verfahren zeichnet sich insbesondere durch ffolgende Vorteile aus:

I. Es wird ein überaus eintacher Kupteraminkatalysator in niedriger Konzentration eingesetzt.

2. Das Verfahren ermöglicht den Einsatz von Luft bzw. nicht explosiver Inertgas-Sauerstoff-Gemische.

3. Die Diphenochinon-Bildung kann reduziert werden.

4. Das Verfahren führt dann zu den besten Ergebnissen, wenn mindestens 10 % des aromatischen Lösemittels durch das billigere Methanol ersetzt werden.

5. Bei einer Reaktionszeit von 100 Minuten werden J-Werte von über 75 ml/g erzielt. Sind für den jeweiligen Verwendungszweck niedrigere J-Werte ausreichend, kann die Reaktionszeit weiter verkürzt werden.

6. Die Ausbeuten an PPO liegen bei über 95 %.

Der Katalysator wird am einfachsten durch Auflösen des Kupfersalzes in Bromwasserstoffsäure und nachfolgendes Vereinigen mit dem sekundären Amin hergestellt. Bei Kupfersalzen, die in sekundären Aminen löslich sind, kann die Reihenfolge auch vertauscht werden. Möglich ist schließlich auch die Auflösung der Kupfersalze in einer Teil- oder Gesamtmenge des aliphatischen Lösemittels. Schwerlösliche Kupfer-II-salze, die sich unter den genannten Bedingungen nicht auflösen, wie z. B. Kupfer-II-sulfid oder -cyanid, müssen in geeigneter Weise aufgeschlossen werden.

Geeignete Kupfersalze umfassen die zweiwertigcn Salze mit Mineralsäuren und organischen Säuren, wie z. B. Kupfer-II-chlorid, Kupfer-II-biomid, Kupfer-II-sulfat und Kupfer-II-acetat. Man kann auch von basischen Kupferverbindungen, wie z. B. basischem Kupfer-II-carbonat uder Kupfer-II-hydroxid, ausgehen, muß in diesem Fall jedoch zusätzlich Bromwasserstoff einsetzen, um zunächst das Kupfer-II-bromid zu erzeugen. Die Möglichkeit, hydratisierte Kupfer-IIsalze oder ihre wäßrigen Lösungen einsetzen zu können, ist bedeutsam, da diese viel leichter erhältlich sind als die wasserfreien Kupfer-II-salze und damit die aufwendige Entfernung des Wassers entfallen kann.

Der Bromwasserstoff kommt üblicherweise in Form einer bis zu 60 %igen wäßrigen Lösung, vorzugsweise als 48%ige Lösung, zum Einsatz. Man kann aber auch gastörmigen Bromwasserstoff verwenden.

Geeignete sekundäre Amine enthalten 4 bis I0 C-Atome. Im einzelnen handelt es sich um aliphatische Amine, wie z. B. Diethylamin, N-Methyl-N-propylamin, Di-n-butylamin, oder cyclische Amine, wie Pyrrolidin oder Piperidin. Es können auch Amingemische eingesetzt werden. Bevorzugt sind Amine mit einem etherisch gebundenen Sauerstoff, wie z. B. Morpholin.

Pro Äquivalent zweiwertiges Kupfersalz werden mindestens 1, 5 Äquivalente sekundäres Amin benötigt, jedoch - bezogen auf die Molzahl X des eingesetzten diorthosubstituierten Phenols - weniger als X/3. Die Menge des Aminhydrobromids liegt zwischen 0,5 und 6 Äquivalenten des Kupfersalzes.

Die Menge des Wassers, die in der Reaktionslösung am Ende der Polykondensation vorliegt, kann bis zu 7 Volumenprozent der gesamten Reaktionsmischung betragen. Dieses Wasser wird zu einem gewissen Anteil bei der Polykondensation gebildet. Es kann aber auch - wie aus der oberen Grenze hervorgeht - in einem

erheblichen Anteil bereits zu Beginn der Reaktion vorhanden sein, sei es, daß man neben der wäßrigen HBr-Lösung wasserhaltige Kupfersalze, wäßrige Kupfersalzlösungen oder wasserhaltige Amine einsetzen möchte.

Das Verfahren wird erfindungsgemäß mit 2, 6-disubstituierten Phenolen der allgemeinen Formel

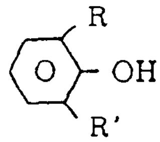

durchgeführt, wobei R und R' ein n-Alkylrest mit 1 bis 6 C-Atomen oder ein Phenylrest sind. Bevorzugt wird 2, 6-Dimethylphenol.

Die Polykondensation erfolgt in einem Lösemittelgemisch, bestehend aus einem aromatischen Kohlenwasserstoff, wie z. B. Benzol, Toluol, Xylol, Ethylbenzol und Styrol einerseits und einem niedrigen aliphatischen Alkohol mit 1 bis 4 C-Atomen andererseits. Ein Gemisch aus Toluol und Methanol wird bevorzugt.

Das Volumenverhältnis der aromatischen zur aliphatischen Komponente liegt zwischen 92, 5: 7,5 und 50: 50 mit der Einschränkung daß während der Polykondensation - infolge eines zu hohen Anteils aliphatischer Alkohole - kein hochmolekulares PPO ausfallen soll. Dies sollte möglichst verhindert werden. Am günstigsten hat sich ein Gemisch von Toluol und Methanol im Verhältnis 90: 10 bis 85: 15 erwiesen, mit dem der J-Wert gegenüber der Fahrweise in reinem Toluol erheblich gesteigert werden kann (siehe Beispiel C). Ein großer Vorteil des vorliegenden Verfahrens ist darin zu sehen, daß Mischungen von Sauerstoft mit einem oder mehreren Inertgasen, wie z. B. Stickstoff oder Argon, mit einem Gehalt von 10 bis 30 Volumenprozent Sauerstoff eingesetzt werden können. Bevorzugt wird Luft verwendet. Es wurde gefunden, daß sich bereits sehr geringe Anteile von Kohlendioxid im $O_2$-haltigen Gasgemisch ungünstig auf den Ablauf der Reaktion auswirken. So läßt sich beispielsweise beim Einsatz von kohlendioxidfreier Luft unter sonst gleichen Bedingungen die Reaktionszeit um 20 bis 30% verkürzen und auch die Bildung von Tetramethyldiphenochinon nimmt erheblich ab (siehe Vergleichsbeispiel A)- Zwar gab es Hinweise (Inorg. Chem.18, 2296 (1979) und 19, 201 (1980), daß spezielle Kupfer-N-tetramethyl-1, 3-propan- bzw. -1, 2-ethandiamin-Carbonat-Komplexe die Diphenochinonbildung begünstigen, doch überrascht es, daß sich bereits ein Anteil von 0,03 Volumenprozent Kohlendioxid in der Luft signifikant in der vermehrten Bildung dieses unerwünschten Nebenprodukts bemerkbar macht.

Nach Erreichen des gewünschten Polymerisationsgrades wird die Polykondensation beispielsweise durch Zugabe von Säure abgestoppt und das PPO auf bekannte Weise isoliert.

Das nach dem erfindungsgemäßen Verfahren erhältliche PPO findet entweder als solches oder als Copolymer in Polyblends zur Herstellung besonders wärmestabiler Formteile Verwendung.

**Beispiel 1**

Katalysatorherstellung:

Man löst 1,95 g $CuCO_3$, $Cu(OH)_2$ in 7,7 g Bromwasserstoffsäure (48%ig) auf und gibt die erhaltene homogene Lösung unter Rühren zu 30 g Morpholin.

Herstellung von Poly-(2,6-Dimethyl-1,4-phenylenoxid):

In einem 3 1-Rührreaktor vereinigt man die oben hergestellte Katalysatorlösung mit einer Mischung aus 1 300 g Toluol und 207 g Methanol, gibt 30 g einer 50%igen Lösung von 2,6-Dimethylphenol in Toluol hinzu und startet die Polykondensation unter Rühren (750 U/ min) durch Einleiten eines Luftstroms ($CO_2$ < 10 ppm) von 200 l/h-Die Reaktionstemperatur wird konstant aut 30°C gehalten. Nach 10 Minuten tropft man weitere 270 g der toluolischen Dimethylphenol-Lösung über einen Zeitraum von 30 Minuten zu. 60 Minuten nach Beendigung der Zugabe stoppt man die Polykondensation durch Zugabe von 200 ml 50%iger Essigsäure. Aus der danach isolierten organischen Phase fällt man das Polyphenylenoxid durch Zugabe von 1 300 g Methanol unter Rühren aus. Das Produkt wird abgenutscht, mit Methanol gewaschen und anschließend 8 Stunden bei 100°C im Ölpumpenvakuum getrocknet.

J = 79 ml/g

Diphenochinongehalt: < 100 ppm

**Beispiel 2**

Man löst 5,1 g $CuBr_2$-$4H_2O$ in 207 g Methanol und 2 g wäßriger 48 %iger HBr und vereinigt diese Lösung mit einer Mischung aus 30 g Morpholin und 1 300 g Toluol. Die weitere Durchführung entspricht Beispiel 1.

J = 76 ml/g

Diphenochinongehalt: < 100 ppm

**Beispiel 3**

Man löst 3,9 g $CuBr_2$ in 5,7 g HBr (38 %ig) und 207 g Methanol und verfährt weiter wie in Beispiel 2.
J = 86 ml/g
Diphenochinongehalt: < 100 ppm

**Beispiel 4**

Wie Beispiel 1, nur setzt man anstelle von 30 g Morpholin 45 g Dibutylamin ein.
J = 76 ml/g
Diphenochinongehalt: < 100 ppm

**Beispiel 5**

Wie Beispiel 3, nur setzt man anstelle von 3,9 g $CuB_2$ 3,0 g $CuCl_2 \times 2H_2O$ ein.
J = 75 ml/g
Diphenochinongehalt: < 100 ppm

**Beispiel 6**

Wie Beispiel 1, nur setzt man anstelle von 30 g Morpholin 45 g Piperidin ein.
J = 74 ml/g
Diphenochinongehalt: < 100 ppm

**Beispiel 7**

Wie Beispiel 1, nur setzt man anstelle von 2,6-Dimethylphenol 160 g 2-n-Butyl-6-methylphenol ein.
J = 65 ml/g
Diphenochinongehalt: < 100 ppm

**Beispiel 8**

Wie Beispiel 1, nur setzt man anstelle von 2,6-Dimethylphenol 180 g 2-Methyl-6-phenylphenol ein. Die Reaktionstemperatur beträgt 45° C.
J = 60 ml/g
Diphenochinongehalt: < 200 ppm

**Vergleichsbeispiel A**

Wie Beispiel 1, nur wird Luft mit einem Gehalt von 300 ppm Kohlendioxid verwendet.
J = 67,5 ml/g
Diphenochinongehalt: 0,15%

**Vergleichsbeispiel B**

Wie Beispiel 1, nur werden anstelle des Lösemittelgemisches aus 1 300 g Toluol und 207 g Methanol nur 1 507 g Toluol eingesetzt.
J = 22 ml/g
Diphenochinongehalt: < 100 ppm.

**Patentansprüche**

1. Verfahren zur Herstellung von Polyphenylenoxiden durch oxidative Kupplung von X Molen eines diorthosubstituierten Phenols der allgemeinen Formel

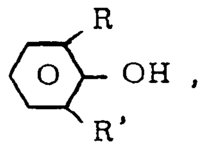

wobei R und R' ein n-Alkylrest mit 1 bis 6 C-Atomen oder ein Phenylrest sind, in Gegenwart eines aktivierten Kupfer-II-aminkatalysators im Temperaturbereich zwischen 20 und 60°C, dadurch gekennzeichnet,
daß man
1. als aktivierten Katalysator einen Komplex bestehend aus
1. 1 a Molen eines Kupfersalzes $CuAn_2$, wobei An das Anion einer organischen Säure oder einer Mineralsäure ist,
1. 2 b Molen eines sekundären alphatischen oder cyclischen Amins mit 4 bis 10 C-Atomen,
1. 3 c Molen des Hydrobromids des gleichen oder eines anderen sekundären aliphatischen oder cyclischen Amins mit 4 bis 10 C-Atomen und
1. 4 gegebenenfalls Wasser, dessen Menge - bezogen auf die Gesamtmenge des Reaktionsgemisches am Ende der Polykondensation - bis zu 7 Volumenprozent betragen kann,
1. 5 wobei für die Molmengen b und c tolgende Bedingungen gelten:
$X/3 > b \geqslant 1,5a$
$6a > C > 0,5a$
1. 6 und man in einem Lösemittelgemisch aus einem aromatischen Kohlenwasserstott mit 6 bis 8 C-Atomen und einem aliphatischen Alkohol mit 1 bis 4 C-Atomen im Volumenverhältnis 92, 5: 7,5 bis 50: 50 mit der Einschränkung arbeitet, daß während der Polykondensation kein Polyphenylenoxid ausfallen soll.

2. Verfahren nach Anspruch 1,
dadurch gekennzeichnet,
daß man als Oxidationsmittel ein Sauerstoff-Inertgas-Gemisch mit 10 bis 40 Volumenprozent Sauerstott einsetzt.

3. Verfahren nach Anspruch 2,
dadurch gekennzeichnet,
daß man als Oxidationsmittel Luft einsetzt.

q. Vertahren nach den Ansprüchen 1 bis 3,
dadurch gekennzeichnet,
daß man als Oxidationsmittel ein Gasgemisch mit weniger als 300 ppm vorzugsweise mit weniger als 10 ppm Kohlendioxid einsetzt.

5. Verfahren nach den Ansprüchen 1 bis 4,
dadurch gekennzeichnet,
daß man als sekundäres Amin Morpholin verwendet.

6. Vertahren nach den Ansprüchen 1 bis 5,
dadurch gekennzeichnet,
daß man die Polykondensation in einem Lösemittelgemisch aus Toluol und Methanol im Verhältnis 90 : 10 bis 85 : 15 durchführt.

7. Vertahren nach den Ansprüchen 1 bis 6,
dadurch gekennzeichnet,
daß man als diorthosubstituiertes Phenol 2,6-Dimethylphenol einsetzt.

**Claims**

1. A process for the production of a polyphenylene oxide by oxidative coupling of X moles of a di-ortho-substituted phenol of the general formula

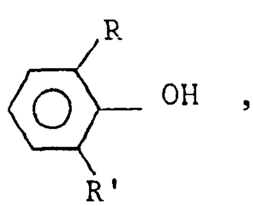

where R and R' are independently n-alkyl of 1 to 6 carbon 5 atoms or phenyl, in the presence of an activated copper (II) amine catalyst at a temperature from 20 to 60°C, characterised in that

1) there is used as catalyst a complex comprising

1.1) A moles of a copper salt $CuAn_2$, where An is the anion of an organic acid or a mineral acid,

1.2) B moles of a secondary aliphatic or cyloaliphatic amine of 4 to 10 carbon atoms,

1.3) C moles of the hydrobromide of an identical or different secondary aliphatic or cyloaliphatic amine of 4 to 10 carbon atoms, and

1.4) optionally water, the amount of which, based on the total amount of the reaction mixture at the end of the polycondensation, can be up to 7 volume%,

1.5) such that for the molar amounts B and C the following conditions hold:

$X/3 > B \geq 1.5A$

$6A > C > 0.5A$, and

1.6) the process is operated in a solvent mixture of an aromatic hydrocarbon of 6 to 8 carbon atoms and an aliphatic alcohol of 1 to 4 carbon atoms in a volume ratio from 92.5:7.5 to 50:50 with the proviso that no polyphenylene oxide is precipitated during the polycondensation.

2. A process according to claim 1, characterised in that an oxygen/inert gas mixture containing 10 to 40 volume% of oxygen is introduced as oxidising agent.

3. A process according to claim 2, characterised in that air is introduced as oxidising agent.

4. A process according to any of claims i to 3, characterised in that a gas mixture with less than 300 ppm, preferably less than 10 ppm, carbon dioxide is introduced as oxidising agent.

5. A process according to any of claims 1 to 4, characterised in that morpholine is used as secondary amine.

6. A process according to any of claims 1 to 5, characterised in that the polycondensation is carried out in a solvent mixture of toluene and methanol in a ratio of 90:10 to 85:15.

>7. A process according to any of claims 1 to 6, characterised in that 2,6-dimethylphenol is introduced as di-ortho-substituted phenol.

## Revendications

1. Procédé de préparation de poly-oxyphénylènes par copulation oxydante de X moles d'un phénol ortho-disubstitué de la formule générale:

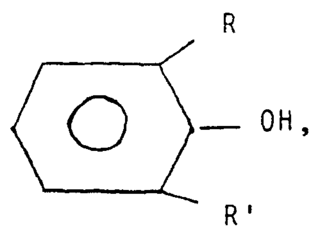

dans laquelle R et R' sont un reste n-alkyle comportant de 1 à 6 atomes de carbone ou un reste phényle, en présence d'un catalyseur activé à base de cuivre (II-amine), dans un domaine de température entre 20 et 60°C, caractérisé par le fait que

1. On utilise comme catalyseur activé un complexe constitué par

1.1 a moles d'un sel de cuivre Cu $An_2$, dans lequel An est l'anion d'un acide organique ou d'un acide minéral,

1.2 b moles d'une amine secondaire aliphatique ou cyclique comportant de 4 à 10 atomes de carbone, et

1.3 c moles du bromhydrate de la même ou d'une autre amine secondaire aliphatique ou cyclique comportant de 4 à 10 atomes de carbone

1.4 éventuellement de l'eau, dont la quantité, relativement à la quantité globale du mélange réactionnel à la fin de la polycondensation, peut atteindre jusqu'à 7% en volume, 1.5 tandis que pour les quantités molaires b et c, sont valables les conditions suivantes:

$X/3 > b \geq 1{,}5a$

$6a > c > 0{,}5a$

1.6 et qu'on travaille dans un solvant constitué par un hydrocarbure comportant de 6 à 8 atomes de carbone et par un alcool aliphatique comportant de 1 à 4 atomes de carbone dans une proportion volumétrique de 92,5 : 7,5 à 50:50, avec cette restriction qu'il ne doit pas se former d'oxyde de polyphénylène pendant la polycondensation.

2. Procédé selon la revendication 1, caractérisé par le fait qu'on utilise, comme agent d'oxydation, un mélange d'oxygène et de gaz inerte renfermant de 10 à 40% en volume d'oxygène.

3. Procédé selon la revendication 2, caractérisé par le fait qu'on utilise de l'air comme agent d'oxydation.

4. Procédé selon les revendications 1 à 3, caractérisé par le fait qu'on utilise, comme agent d'oxydation, un mélange comportant moins de 300 ppm, de préference moins de 10 ppm de dioxyde de carbone.

5. Procédé selon les revendications 1 à 4, caractérisé par le fait qu'on utilise la morpholine comme amine secondaire.

6. Procédé selon les revendications 1 à 5, caractérisé par le fait qu'on effectue la polycondensation dans un mélange solvant constitué par du toluène et du méthanol dans une proportion de 90 : 10 à 85 : 15.

7. Procédé selon les revendications 1 à 6, caractérisé par le fait qu'on utilise, comme phénol ortho-disubstitué, le 2,6-diméthyl-phénol.